# FASCICULE DE BREVET EUROPEEN

(11) **EP 3 455 682 B1**
(45) Date de publication et mention de la délivrance du brevet: **27.10.2021**
(21) Numéro de dépôt: 17727291.1
(22) Date de dépôt: 10.05.2017
(51) Int. Cl.: G05B 19/4062

(54) **PROCÉDÉ DE COMMANDE D'UN ACTIONNEUR ET DISPOSITIF DE COMMANDE ASSOCIÉ**
VERFAHREN ZUR STEUERUNG EINES AKTUATORS UND ZUGEHÖRIGE STEUERUNGSVORRICHTUNG
METHOD FOR CONTROLLING AN ACTUATOR AND ASSOCIATED CONTROL DEVICE

(30) Priorité: 10.05.2016 FR 1654142
(43) Date de publication de la demande: 20.03.2019
(73) Titulaire: Safran Aircraft Engines, 75015 Paris (FR)
(72) Inventeur: FOIRET, Guilhem, Alcide, Auguste, 77550 Moissy-Cramayel (FR)
(74) Mandataire: Regimbeau
(86) Numéro de dépôt international: PCT/FR2017/051120
(87) Numéro de publication internationale: WO 2017/194881

(56) Documents cités:
- US-A- 4 524 313

## Description

### DOMAINE DE L'INVENTION

La présente invention concerne un procédé de commande d'un actionneur comportant un élément mobile, et un dispositif de commande configuré pour mettre en œuvre un tel procédé.

### ETAT DE LA TECHNIQUE

Pour commander le déplacement d'un élément mobile d'actionneur, il est bien connu de mettre en œuvre un système d'actionnement fonctionnant en boucle fermée. Pour ce faire, un dispositif de commande de l'actionneur génère un signal de commande de l'actionneur sur la base d'un signal de consigne et d'un signal de retour fourni par un capteur mesurant la position de l'élément mobile de l'actionneur.

Il est également connu de doubler le capteur de position de l'actionneur. Les deux capteurs fournissent deux signaux de mesure de position A et B.

Par exemple, le document US 4,524,313 décrit un système de commande d'un moteur dans lequel deux signaux A et B de mesure de position angulaire du moteur sont remontés. Lorsque l'écart entre les deux signaux A et B dépasse un seuil prédéterminé, le moteur est stoppé en urgence. Toutefois, lorsque l'un des capteurs utilisés subit une défaillance, ce système n'est pas capable de déterminer lequel des deux capteurs est défaillant.

Théoriquement, une telle redondance de capteurs permet par ailleurs de continuer à bien réguler l'actionneur dans le cas où un des capteurs tombe en panne.

Tant que l'écart entre les deux signaux demeure inférieur à un seuil prédéterminé, le signal de commande dépend des deux signaux A et B. Lorsque l'écart entre les deux signaux dépasse un seuil prédéterminé, le système d'actionnement sélectionne l'un des deux signaux de mesure A, B. Le signal de commande est généré par le dispositif de commande uniquement à l'aide du signal sélectionné.

Il est connu de sélectionner, parmi les deux signaux de mesure A et B, celui qui est de valeur maximale (ou minimale), lorsque l'écart atteint le seuil prédéterminé. Pour certains systèmes, la valeur extrémale choisie (maximale ou minimale, selon le système considéré) est une valeur dite sécuritaire, c'est-à-dire une valeur qui minimise voire empêche certains effets de bord non désirés.

Un inconvénient de ce type de solution est qu'il ne permet pas de pallier une défaillance du signal sécuritaire. Dans le cas d'une telle défaillance, la boucle locale d'asservissement essaie de réguler la position de l'actionneur sur la base du signal sécuritaire, lequel est erroné et bruité. En conséquence, la position réelle de l'actionneur s'éloigne d'un signal de consigne et subit des variations rapides, ce qui accélère l'usure de l'actionneur. Dans le contexte particulier d'un actionneur pour moteur de turbomachine, les performances du moteur peuvent s'en trouver dégradées et la consommation de carburant du moteur augmenter de façon indue. Dans certains cas de panne, la dérive est accompagnée d'un fort bruit sur la mesure, conséquence d'une mauvaise connexion électrique. Dans un système où l'actionneur contrôle une vanne de type VSV (« Variable Stator Vane »), la sélection de la voie de mesure en défaut provoquera des oscillations réelles de la vanne VSV (la boucle locale essaie de réguler sur un retour de position qui est très bruité), ce qui peut causer des événements opérationnels non désirés.

Un autre inconvénient de cette solution est qu'il n'est pas réellement effectué de diagnostic de la défaillance rencontrée. Il est alors nécessaire d'appeler une équipe de maintenance au sol pour réaliser un diagnostic, lequel est potentiellement long et coûteux.

### EXPOSE DE L'INVENTION

Un but de l'invention est de détecter automatiquement et rapidement une dérive d'un capteur de position dans un système d'actionnement en boucle fermée utilisant plusieurs capteurs de position. L'invention est définie par les revendications 1 à 9.

Un autre but de l'invention est de pallier une telle dérive sans intervention humaine.

Il est ainsi proposé un procédé de commande d'un actionneur comprenant un élément mobile, le procédé comprenant des étapes de:
- réception d'un signal de consigne et de deux signaux de mesure de position de l'élément mobile acquis par différents capteurs de position ;
- calcul d'un écart entre les deux signaux de mesure de position ;
- génération d'un signal de commande pour commander un déplacement de l'élément mobile à partir du signal de consigne et d'au moins un des signaux de mesure de position ;
- commande de déplacement de l'élément mobile (60) de l'actionneur (4) à l'aide du signal de commande (S) généré ;
dansl lequel, lorsque l'écart entre les signaux de mesure de position franchit un seuil prédéterminé, ledit procédé comporte les étapes suivantes:
- fixation du signal de commande en boucle ouverte à une valeur constante choisie indépendamment des signaux de mesure de position (A, B) de sorte à immobiliser l'élément mobile ;
- pour chacun des deux signaux de mesure, calcul d'un intervalle de positions associé au signal de mesure, dans lequel au moins un des intervalles de positions a une longueur supérieure à la résolution du capteur de position (7) ayant acquis le signal de mesure (A) associé à l'intervalle ;
- détection d'une sortie de la valeur d'un signal de mesure hors de l'intervalle associé pendant que le signal de commande est fixé à la valeur constante.

Grâce à la fixation du signal de commande en boucle ouverte, l'actionneur immobilise son élément mobile. Lorsque l'élément mobile est immobile, un signal de mesure fourni par un capteur fonctionnant correctement indique une position constante de l'élément mobile de l'actionneur, tandis qu'un signal fourni par un capteur défaillant peut continuer à varier. La sortie de la valeur d'un des signaux de mesure hors de l'intervalle qui lui est associé signifie que ce signal subit une telle variation, ce qui permet donc de détecter que ce signal est entaché d'une dérive. Ainsi, la définition d'un intervalle de positions pour chacun des signaux de mesure permet de détecter une dérive dans l'un quelconque des signaux de mesure de position.

De plus, la fixation du signal de commande en boucle ouverte à une valeur constante maintient immobile l'actionneur, ce qui permet d'éviter une usure prématurée de cet actionneur après détection du franchissement du seuil prédéterminé.

Le procédé de commande ici proposé présente en outre l'avantage de permettre une détection de panne de façon simple : d'une part, des mesures complémentaires autres que celles fournies par les capteurs de position ne sont pas nécessaires pour diagnostiquer une dérive d'un des capteurs de position ; d'autre part, aucun modèle thermodynamique de l'actionneur, coûteux en termes de charge de calcul et moins précis, n'est nécessaire pour un tel diagnostic.

Le procédé de commande selon l'invention peut être complété à l'aide des caractéristiques optionnelles suivantes, prises seules ou en combinaison lorsque cela est techniquement possible.
- le signal de commande est fixé à une valeur constante choisie indépendamment des signaux de mesure de position ;
- après l'étape de détection de sortie, le signal de commande est généré à partir du signal de consigne et d'au moins un signal de mesure, à l'exception du signal de mesure dont la sortie hors de l'intervalle associé a été détectée ;
- le signal de commande est généré à partir du signal de consigne et d'au moins un signal de mesure après une durée prédéterminée à compter de l'instant auquel l'écart entre les signaux de mesure a franchi le seuil prédéterminé, la durée étant de préférence inférieure à 100 millisecondes ;
- le procédé comprend un signalement d'une défaillance du signal de mesure dont la valeur est sortie hors de l'intervalle associé.
- l'intervalle de position inclut la valeur prise par le signal de mesure lorsque l'écart a franchi le seuil prédéterminé ;
- au moins un des intervalles de positions a une longueur supérieure ou égale à six fois ladite résolution ;
- le signal de commande est généré à partir d'une moyenne de chaque signal de mesure de position dont la sortie hors de l'intervalle associé n'a pas été détectée.

Il est également proposé, selon un deuxième aspect de l'invention, un dispositif de commande d'un actionneur comprenant un élément mobile, le dispositif de commande comprenant :
- au moins une entrée pour recevoir un signal de consigne et deux signaux de mesure de position de l'élément mobile acquis par des capteurs de position différents ;
- un réseau correcteur configuré pour calculer un écart entre les deux signaux de mesure de position, et pour générer un signal de commande pour commander un déplacement de l'élément mobile, à partir du signal de consigne et d'au moins un des signaux de mesure de position, et transmettre le signal de commande (S) généré à l'actionneur pour que l'actionneur déplace l'élément mobile (60) de l'actionneur (4) à l'aide du signal de commande (S) ;
dans lequel le réseau correcteur est en outre configuré pour mettre en œuvre les étapes suivantes, lorsque l'écart entre les signaux de mesure franchit un seuil prédéterminé:
- fixer le signal de commande en boucle ouverte à une valeur constante choisie indépendamment des signaux de mesure de position (A, B) de sorte à immobiliser l'élément mobile ;
- pour chacun des deux signaux de mesure, calculer un intervalle de positions associé au signal de mesure, dans lequel au moins un des intervalles de positions a une longueur supérieure à la résolution du capteur de position (7) ayant acquis le signal de mesure (A) associé à l'intervalle ;
- détecter une sortie de la valeur d'un signal de mesure hors de l'intervalle associé, pendant que le signal de commande est fixé à la valeur constante.

Il est également proposé, selon un troisième aspect de l'invention, un système de commande d'un actionneur comprenant un élément mobile, le système comprenant :
- un dispositif de commande de l'actionneur selon le deuxième aspect de l'invention,
- une pluralité de capteurs de position configurés pour acquérir des signaux de mesure de position de l'élément mobile ;
- au moins une voie de retour pour transmettre à l'entrée du dispositif de commande les signaux de mesure acquis par les capteurs de position.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une représentation schématique d'un système d'actionnement selon un mode de réalisation de l'invention.
- Les figures 2 et 3 illustrent des étapes d'un procédé de commande d'un actionneur, selon un mode de réalisation de l'invention.
- Les figures 4a et 4b représentent divers signaux transitant dans le système d'actionnement représenté sur la figure 1, au cours de la mise en œuvre du procédé de commande dont les étapes sont représentées sur les figures 2 et 3.

Sur l'ensemble des figures, les éléments similaires portent des références identiques.

### DESCRIPTION DETAILLEE DE L'INVENTION

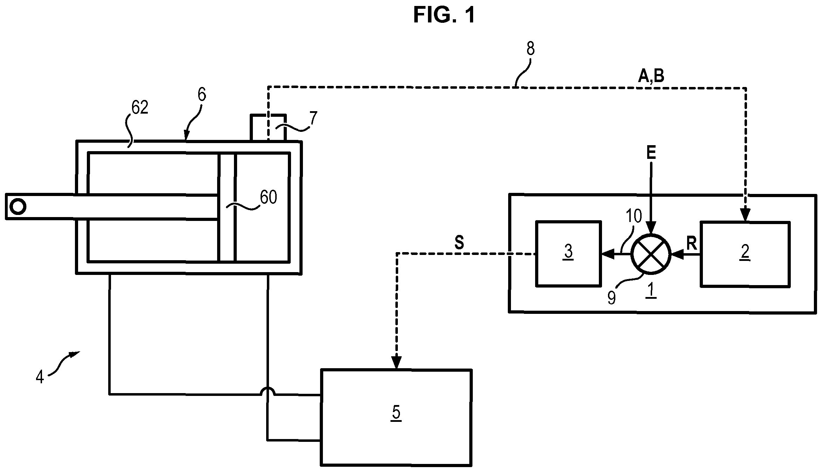

En référence à la **figure 1****,** un système d'actionnement comprend un dispositif de commande 1.

Le dispositif de commande 1 comprend au moins une entrée configurée pour recevoir différents signaux : un signal de consigne E et une pluralité de signaux de mesure A, B qui sont détaillés ci-après.

Le dispositif de commande 1 comprend par ailleurs un module de contrôle 2 configuré pour générer un signal de retour R à partir d'au moins un des signaux de mesure A, B.

Le dispositif de commande comporte un comparateur 9 chargé d'évaluer la différence entre le signal de consigne E et le signal de retour R généré par le module de contrôle 2. Le signal généré par le comparateur 9 est nommé par la suite signal d'écart 10.

Le dispositif de commande 1 comprend en outre un réseau correcteur 3 configuré pour générer un signal de commande S à partir du signal de consigne E et/ou de la différence entre le signal de consigne E et le signal de retour R évaluée par le comparateur 9, ou signal d'écart 10.

Le module de contrôle 2, le réseau correcteur 3 et le comparateur 9 peuvent être des composants physiques distincts au sein du dispositif de commande 1. Chacun de ces composants comprend au moins un processeur configuré pour exécuter un programme spécifique.

En variante, le module de contrôle 2 et le réseau correcteur 3 sont des module virtuels d'un même programme exécuté par au moins un processeur du dispositif de commande 1.

Le système d'actionnement comprend par ailleurs un actionneur 4 comprenant un élément mobile.

L'actionneur 4 est configuré pour déplacer son élément mobile à partir du signal de commande S généré par le réseau correcteur 3 du dispositif de commande 1.

Dans le mode de réalisation non limitatif représentée en figure 1, l'actionneur 4 est un actionneur hydraulique comprenant une servovalve 5 et un vérin 6 ; l'élément mobile est un piston 60 du vérin 6 mobile en translation dans un cylindre 62 du vérin 6. La servovalve 5 est configurée pour injecter un fluide dans le cylindre 62 du vérin 6 avec un certain débit et une certaine pression qui dépendent du signal de commande S, de sorte à déplacer le piston 60 par rapport au cylindre 62. D'autres types d'actionneurs peuvent cependant être utilisés, par exemple un actionneur électrique.

L'actionneur 4 comprend par ailleurs une pluralité de capteurs de position 7. Chaque capteur de position 7 est configuré pour acquérir un signal de mesure de position de l'élément mobile 60 de l'actionneur. Chacun des capteurs 7 fournit en d'autres termes une mesure de position indépendante des autres capteurs 7. Chaque capteur est par exemple du type LVDT (« Linear Variable Differential Transformer »).

Dans le mode de réalisation détaillé ci-après, on prend l'exemple d'une paire de capteurs 7 générant une paire de signaux de mesure indépendants A, B. Toutefois, l'invention peut être généralisée à un nombre plus important de capteurs 7.

Le système d'actionnement comprend par ailleurs une pluralité de voies de retour 8. Chaque voie de retour 8 est raccordée à l'un des capteurs de position 7 et d'autre part à l'entrée du dispositif de commande 1, de sorte à transmettre les signaux de mesure A, B au module de contrôle 2.

Le système d'actionnement est configurable dans deux modes de fonctionnement différents : un mode de fonctionnement en boucle ouverte, et un mode de fonctionnement en boucle fermée.

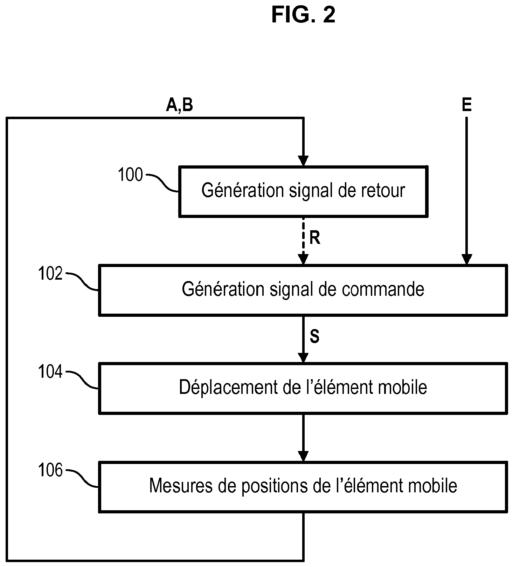

En référence à la **figure 2****,** Le mode de fonctionnement en boucle fermée du système d'actionnement est le suivant.

Dans une étape 100, le signal de retour R est généré par le module de contrôle 2 à partir d'au moins un des signaux de mesure A, B.

Dans une étape 102, le réseau correcteur 3 génère le signal de commande S à partir d'un signal de consigne E reçu par l'entrée du dispositif de commande 1, et à partir du signal d'écart 10 généré par le comparateur 9.

Le signal de commande S est transmis, par une sortie appropriée du dispositif de commande 1, à la servovalve 5 de l'actionneur 4.

Dans une étape 104, la servovalve déplace l'élément mobile 60 de l'actionneur 4 en fonction du signal de commande S.

Les différents capteurs 7 acquièrent par ailleurs les signaux de mesure A et B de position de l'élément mobile 60 au cours d'une étape 106 de mesure de positions de l'élément mobile.

Ces signaux mesure A, B sont transmis au module de contrôle 2 du dispositif de commande 1 en vue d'appliquer l'étape 100 de génération du signal de retour R.

Dans le mode de fonctionnement en boucle ouverte, la génération 102 du signal de commande S n'utilise pas le signal de retour R généré par le module de contrôle 2.

Il peut être prévu que, dans le mode de fonctionnement en boucle ouverte, la génération 100 du signal de retour R ne soit pas mise en œuvre, celui-ci n'étant de toute façon pas utilisé par le réseau correcteur 3 dans ce contexte. Alternativement, l'étape 100 est quand même mise en œuvre dans le mode de fonctionnement en boucle ouverte.

Pour diagnostiquer une défaillance d'un capteur de position 7, le système d'actionnement bascule de l'un à l'autre mode de fonctionnement à l'autre par reconfiguration du dispositif de commande 1, de sorte que le réseau correcteur utilise ou non le signal de retour R.

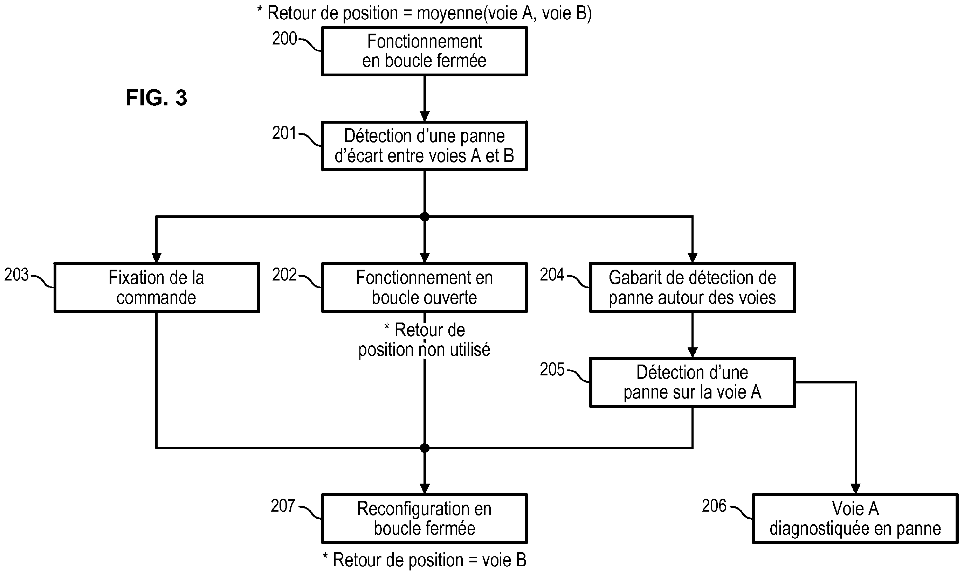

En référence la **figure 3****,** le dispositif de commande 1 change de mode de fonctionnement au moyen des étapes suivantes.

Le dispositif de commande 1 calcule un écart entre les signaux de mesure A, B reçus par le module de contrôle 2. Le calcul de cet écart est par exemple mis en œuvre par le module de contrôle 2 lui-même. Les signaux étant des signaux de position, l'écart est un écart de position.

Le dispositif de commande 1 compare l'écart entre les signaux de mesure avec un seuil prédéterminé.

Ce seuil est déterminé par des pratiques de conception qui prennent en compte les caractéristiques du système de mesure et le retour d'expérience, par exemple la précision du système de mesure (par un facteur multiplicatif appliqué à l'erreur du système), un seuil de panne déterminé de tel sorte qu'il ne puisse pas survenir d'événements opérationnels avant d'atteindre ce seuil de panne.

Tant que l'écart entre les deux signaux de mesure A, B est inférieur au seuil prédéterminé, le dispositif de commande 1 est configuré en boucle fermée.

Lorsque l'écart entre les deux signaux de mesure A, B dépasse le seuil prédéterminé, le dispositif de commande 1 se reconfigure en boucle ouverte. A compter de ce dépassement, le signal de commande S n'est donc pas généré à l'aide du signal d'écart 10. Le signal de retour R n'est donc plus pris en compte pour la génération du signal de commande S.

Plus précisément, après avoir détecté que l'écart entre les signaux A, B a dépassé le seuil prédéterminé, le réseau correcteur se reconfigure de sorte à générer un signal de commande S ayant une valeur constante.

Cette valeur constante est par exemple une valeur prise par le signal de commande à l'instant auquel le dépassement de seuil a été détecté par le dispositif 1.

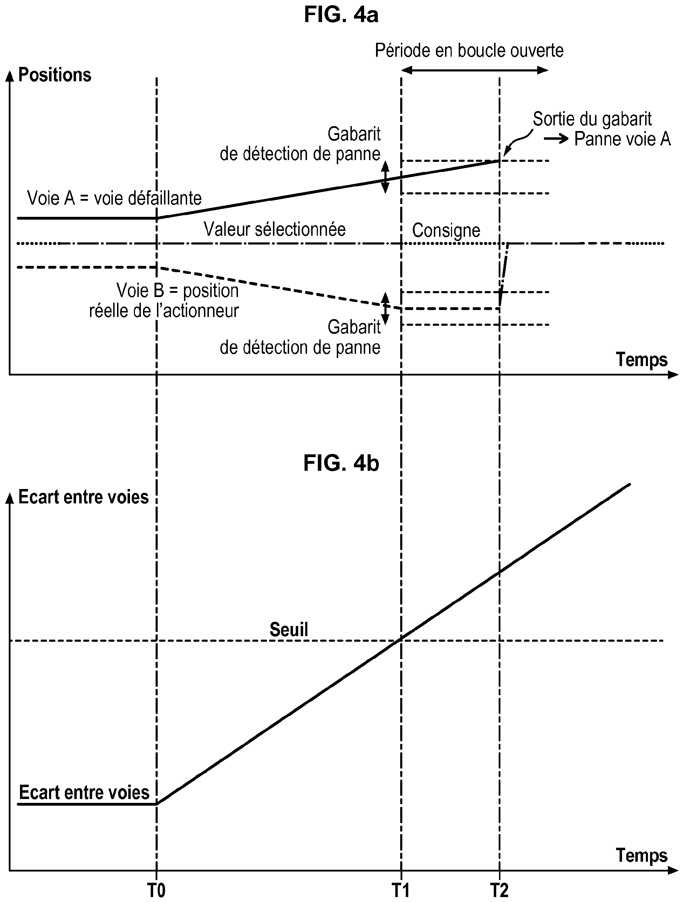

On a représenté en **figures 4a et 4b** un scénario de panne d'un des deux capteurs 7 de position.

Le capteur produisant le signal de position A (en haut de la figure 4a) est supposé imparfait, c'est-à-dire que le signal A est bruité, et potentiellement sujet à des pannes susceptible d'introduire une dérive dans le signal A.

Le capteur produisant le signal de position B (en bas de la figure 4a) est supposé parfait, c'est-à-dire qu'il mesure parfaitement la position de l'élément mobile de l'actionneur.

La figure 4b représente l'évolution de l'écart entre les signaux A et B au cours du temps. Jusqu'à un instant T0, les deux capteurs 7 fonctionnement sans subir de dérive. Ainsi, l'écart entre les signaux A, B qu'ils acquièrent est inférieur au seuil prédéterminé. Au cours de cette première période, le dispositif de commande 1 reste donc configuré en boucle fermée (étape 200 sur la figure 3), c'est-à-dire que le signal de commande est généré à partir du signal de consigne E et du signal de retour R. Dans ce cas, le signal R est par exemple :
- préférentiellement la moyenne des signaux de mesure A et B ce qui représente un choix avantageux en termes de précision, ou
- Le signal de valeur maximale parmi les signaux A et B, ou
- Le signal de valeur minimale parmi les signaux A et B.

A l'instant T1, l'un des capteurs 7, par exemple celui qui fournit le signal de mesure A, commence à dériver. L'autre capteur 7 fournissant le signal B continue quant à lui à fonctionner sans dérive.

A un instant T2, le module de contrôle 2 détecte 201 que l'écart entre les signaux de mesure A, B atteint le seuil prédéterminé. L'instant T2 marque le début d'une période au cours de laquelle est opéré un diagnostic de panne des capteurs 7 selon l'invention.

En réponse à la détection 201, le réseau correcteur reconfigure 202 le signal de commande S dans un état propre à immobiliser l'élément mobile 60.

Par exemple, le réseau correcteur fixe le signal de commande S à une valeur constante. Dans cas, le module de contrôle 2 transmet au réseau correcteur 3 un signal de reconfiguration l'enjoignant de ne plus utiliser le signal de retour R pour la génération 102 du signal de commande S (donc à se reconfigurer en boucle ouverte).

Le dispositif de commande 1 mémorise une valeur du signal de consigne, et configure son réseau correcteur 3 de sorte que le réseau correcteur 3 utilise sélectivement cette valeur mémorisée pour maintenir le signal de commande S constant pendant que l'écart entre les signaux de mesure est supérieur au seuil prédéterminé. En d'autres termes, le signal de commande, d'ordinaire potentiellement variable, est dans ce cas fixé à la valeur mémorisée.

De préférence, la valeur mémorisée utilisée est la valeur E1 prise par le signal de consigne E à l'instant T2, c'est-à-dire lorsque l'écart entre les signaux de mesure a atteint le seuil prédéterminé.

Alternativement, la valeur mémorisée utilisée est la dernière valeur du dernier signal de retour de position, consolidée par exemple par la moyenne des deux signaux A et B.

Une fois la consigne fixée à la valeur mémorisée (du point de vue du réseau correcteur 2), il n'y a plus de variations de position de l'actionneur 4. En conséquence, les signaux de mesure A et B sont dès lors censés être désormais constants. Si un signal de mesure A ou B continue néanmoins à varier après la fixation du signal de commande S, c'est que ce signal dérive.

Pour diagnostiquer une telle défaillance, le dispositif de commande 1 calcule, pour chacun des signaux de mesure A, B, un intervalle de positions associé à ce signal de mesure. Chaque intervalle inclue la valeur prise par le signal de mesure correspondant lorsque l'écart a dépassé le seuil. Par conséquent, à l'instant T1, chaque signal de mesure A, B prend une valeur incluse dans l'intervalle qui lui est associée.

Par exemple, l'intervalle est de la forme [E1-X, E1+X], X étant une longueur prédéterminée propre au capteur qui a fourni le signal de mesure associé à l'intervalle.

A compter de l'instant T1, le dispositif de commande surveille qu'un signal de sortie demeure à l'intérieur de l'intervalle qui lui est associé ou non.

Lorsque le dispositif détecte qu'un signal prend une valeur hors de l'intervalle associé, alors le signal en question est considéré comme défaillant. En effet, la sortie de la valeur d'un signal de mesure hors de l'intervalle qui lui est associé est représentative du fait que la dérive de ce signal atteint une valeur critique. L'intervalle défini constitue ainsi un gabarit de détection de panne.

Dans l'exemple considéré en figure 4, le signal A comporte une dérive qui ne cesse d'augmenter à partir de l'instant T1 et atteint une valeur critique en l'instant T2, qui est l'instant auquel la valeur du signal A sort hors de l'intervalle associé à ce signal A.

Le signal B est en revanche considéré comme parfait, c'est-à-dire qu'il mesure la position réelle de l'élément mobile de l'actionneur 4. Ce signal B ne sort donc pas hors de l'intervalle qui lui a été associé.

Dans une étape 205, le dispositif de commande 1 détecte la sortie de la valeur dudit signal de mesure A hors de l'intervalle associé. Cette sortie détectée de la valeur du signal de mesure A est considérée comme une panne de mesure de la voie A.

Dans une étape 206, le dispositif de commande signale le signal A comme un signal défaillant. Ce signalement 206 peut par exemple comprendre l'envoi d'un message d'erreur à un autre dispositif, et/ou l'affichage d'un message d'erreur sur un écran d'affichage raccordé au dispositif de commande 1 et/ou l'activation d'un témoin lumineux, etc. Un opérateur peut ainsi conclure que le capteur de position 7 émetteur du signal défaillant a subi un dysfonctionnement et ainsi le remplacer ou le réparer.

Au cours de la période [T0, T1], le signal de commande S est constant si bien que l'élément mobile de l'actionneur demeure immobile.

En réponse à la détection de sortie 205, le module de contrôle 2 est reconfiguré de sorte à générer un signal de retour R sans utiliser le signal A considéré comme défaillant. Dans le mode de réalisation jusqu'ici décrit, dans lequel deux signaux A et B sont traités, le signal de retour R ne dépend ainsi que du signal B après la reconfiguration 207.

Dans un mode de réalisation particulièrement simple à mettre en œuvre, le module de contrôle 2 est reconfiguré de sorte à fonctionner comme un sélecteur de signal de mesure : le signal B non-défaillant est alors simplement sélectionné comme signal de retour R.

Dans un autre mode de réalisation à plus de deux signaux de mesure, il pourrait être envisagé de reconfigurer le module de contrôle de sorte qu'il ne génère le signal de retour R sur la base de chaque signal de mesure, par exemple leur moyenne, à l'exception de tout signal détecté comme défaillant.

Par ailleurs, en réponse à la détection d'une panne 205, le dispositif de commande 1 reconfigure 207 son réseau correcteur 3, de sorte que ce dernier utilise à nouveau le signal de retour R pour la génération 102 du signal de commande S.

De préférence, cette reconfiguration 207 du signal R dans le réseau correcteur 3 est mise en œuvre après exclusion du signal défaillant de la génération du signal R, de sorte que la commande S ne soit pas entachée d'erreur.

Au terme de cette reconfiguration, le système d'actionnement fonctionne à nouveau en boucle fermée. Néanmoins, le signal de mesure A, défaillant, n'est désormais plus utilisé pour la mise en œuvre de cette boucle fermée.

Par ailleurs, après la détection de sortie 205, le dispositif de commande 1 reconfigure son réseau correcteur 3, de sorte que ce dernier utilise à nouveau le signal de consigne E reçu par le dispositif de commande 1, dont la valeur est susceptible de varier, au lieu de la valeur constante E1 précédemment mémorisée.

De préférence, cette réutilisation du signal de consigne E dans le réseau correcteur 3 au lieu de la valeur fixe E1 mise en œuvre après la reconfiguration du réseau correcteur 3 de sorte que ce dernier utilise à nouveau le signal de retour R.

Il a été vu précédemment que la fixation du signal de commande S a pour conséquence de faire en sorte qu'un capteur 7 ne subissant pas de défaillance particulière produit un signal de mesure constant. Toutefois, un signal de mesure n'est jamais parfaitement stable : il subsiste toujours un bruit de mesure dû à l'acquisition et au traitement du signal électrique par le capteur de position 7 correspondant.

Les inventeurs ont fait l'expérience qu'un signal de mesure de position varie avec une amplitude de l'ordre de la résolution du capteur après fixation du signal de commande S (le bruit est donc faible voire nul). Ainsi, la longueur de l'intervalle associée à un capteur de position 7 est avantageusement choisie supérieure à la résolution de ce capteur, ce qui permet d'éviter des fausses alarmes. De préférence, la longueur d'un intervalle est supérieure ou égale à 6 fois la résolution du capteur ayant acquis le signal de mesure associé à cet intervalle. Par exemple, si l'on considère un signal de mesure acquis avec une résolution de 0.1, la demi-longueur X de l'intervalle associé pourra être choisie égale à 0,3 : l'intervalle sera ainsi [E1-0.3, E1+0.3], de longueur égale à 0.6.

En outre, on comprend aisément qu'il n'est pas idéal de figer le signal de commande de l'actionneur 4 pendant trop longtemps, puisque le signal de consigne en entrée est ignoré. Aussi, le maintien du signal de commande à une valeur constante est mise en œuvre avantageusement au cours d'une durée prédéterminée à compter de l'instant auquel l'écart entre les signaux de mesure a franchi le seuil prédéterminé.

Au terme de cette durée, le réseau correcteur 3 se reconfigure de sorte à générer le signal de commande S à partir du signal de consigne E et du signal de retour R. Le système se retrouve alors de nouveau configuré en boucle fermée.

Si aucune sortie hors d'un intervalle n'a été détectée dans cette durée impartie, alors aucune panne n'a été détectée. Il peut alors être envisagé de générer le signal de retour R sélectivement sur la base d'un signal de mesure de position extrémal (maximal ou minimal), à titre sécuritaire.

De préférence, cette durée de fixation de la commande S est inférieure à 100 millisecondes, cet intervalle de valeur permettant de figer très peu de temps l'actionneur, tout en garantissant des performances de détection convenable pour un actionneur de type classique. Très avantageusement, cette durée de fixation de la commande S est comprise entre 40 et 60 millisecondes, par exemple 50 millisecondes.

Considérons par exemple, la position d'un actionneur 4 compris dans un moteur civil classique dont la position a une résolution de 0.03 degrés, pour une course totale de 40 degrés. Généralement, un tel actionneur 4 est capable de parcourir toute sa course en une durée de l'ordre de la seconde. Le gabarit de détection de panne après gel de la commande 203 serait de plus ou moins 0.09 degrés autour de la valeur enregistrée au moment du gel de la commande. Si on fixe la consigne pendant une durée de 0.5 secondes, la plus petite dérive de mesure détectable sera de 0.18 degrés/seconde. Il est évident qu'une dérive plus rapide sera détectée. Si on choisit de ne fixer que pendant 0.1 seconde, la dérive limite détectée sera de 0.9 degrés / seconde. Une dérive réelle d'une mesure de ce type a été observée en exploitation. La dérive était d'environ 20 degrés/seconde, soit largement au-dessus des limites de détection citées ci-dessus. Par conséquent, la durée du gel est dépendante de la rapidité de la dérive à détecter.

Grâce au procédé mis en œuvre, il est ainsi possible de détecter et localiser la dérive d'une voie de mesure d'une position d'un actionneur fonctionnant en boucle fermée, et également d'exclure automatique la voie de mesure défaillante.

En plus d'améliorer la gestion en temps réel des pannes par le moteur, l'invention permet de diagnostiquer la voie en panne. Cette information permettra d'orienter les recherches de panne de la maintenance au sol, ce qui réduit la durée de ces recherches.

Le système d'actionnement présenté précédemment trouve avantageusement application dans un moteur de turbomachine, par exemple :
- dans un doseur de carburant de la turbomachine,
- dans un système de vannes VSV (« Variable Stator Vanes ») pour ajuster l'angle de stators au niveau d'un compresseur haute-pression de la turbomachine,
- dans un système HPTACC (« High Pressure Turbine Active Clearance Control ») de contrôler d'un jeu entre une turbine haute pression et un carter de la turbomachine.

## Revendications

1. Procédé de commande d'un actionneur (4) comprenant un élément mobile (60), le procédé comprenant des étapes de:
• réception d'un signal de consigne (E) et de deux signaux de mesure de position (A, B) de l'élément mobile (60) acquis par différents capteurs de position (7) ;
• calcul d'un écart entre les deux signaux de mesure de position (A, B) ;
• génération (102) d'un signal de commande (S) pour commander un déplacement de l'élément mobile (60), à partir du signal de consigne (E) et d'au moins un des signaux de mesure de position (A, B) ;
• commande de déplacement de l'élément mobile (60) de l'actionneur (4) à l'aide du signal de commande (S) généré ;
**caractérisé en ce que** lorsque l'écart entre les signaux de mesure de position (A, B) franchit (201) un seuil prédéterminé, ledit procédé comporte les étapes suivantes:
• fixation (202) du signal de commande (S) en boucle ouverte à une valeur constante choisie indépendamment des signaux de mesure de position (A, B) de sorte à immobiliser l'élément mobile (60) ;
• pour chacun des deux signaux de mesure (A, B), calcul d'un intervalle de positions associé au signal de mesure (A), dans lequel au moins un des intervalles de positions a une longueur supérieure à la résolution du capteur de position (7) ayant acquis le signal de mesure (A) associé à l'intervalle ;
• détection d'une sortie de la valeur d'un signal de mesure (A) hors de l'intervalle associé pendant que le signal de commande (S) est fixé à la valeur constante.

2. Procédé selon la revendication 1, dans lequel, après l'étape de détection de sortie, le signal de commande (S) est généré à partir du signal de consigne (E) et d'au moins un signal de mesure (A), à l'exception du signal de mesure (A) dont la sortie hors de l'intervalle associé a été détectée.

3. Procédé selon l'une des revendications précédentes, dans lequel le signal de commande (S) est généré à partir du signal de consigne (E) et d'au moins un signal de mesure (A, B) après une durée prédéterminée à compter de l'instant auquel l'écart entre les signaux de mesure (A, B) a franchi le seuil prédéterminé, la durée étant de préférence inférieure à 100 millisecondes.

4. Procédé selon l'une des revendications précédentes, comprenant le signalement (206) d'une défaillance du signal de mesure (A) dont la valeur est sortie hors de l'intervalle associé.

5. Procédé selon l'une des revendications précédentes, dans lequel l'intervalle de position inclut la valeur prise par le signal de mesure (A) lorsque l'écart a franchi le seuil prédéterminé.

6. Procédé selon l'une des revendications précédentes, dans lequel au moins un des intervalles de positions a une longueur supérieure ou égale à six fois ladite résolution.

7. Procédé selon l'une des revendications précédentes, dans lequel le signal de commande (S) est généré à partir d'une moyenne (R) de chaque signal de mesure (A) de position dont la sortie hors de l'intervalle associé n'a pas été détectée.

8. Dispositif de commande (1) d'un actionneur (4) comprenant un élément mobile (60), le dispositif de commande (1) comprenant :
• au moins une entrée pour recevoir un signal de consigne (E) et deux signaux de mesure (A, B) de position de l'élément mobile (60) acquis par des capteurs de position (7) différents ;
• un réseau correcteur (3) configuré pour : calculer un écart entre les deux signaux de mesure de position (A, B), générer un signal de commande (S) pour commander un déplacement de l'élément mobile (60), à partir du signal de consigne (E) et d'au moins un des signaux de mesure (A, B) de position, et transmettre le signal de commande (S) généré à l'actionneur pour que l'actionneur déplace l'élément mobile (60) de l'actionneur (4) à l'aide du signal de commande (S) ;
**caractérisé en ce que** le réseau correcteur (3) est en outre configuré pour mettre en œuvre les étapes suivantes, lorsque l'écart entre les signaux de mesure (A, B) franchit un seuil prédéterminé:
• fixer le signal de commande (S) en boucle ouverte à une valeur constante choisie indépendamment des signaux de mesure de position (A, B) de sorte à immobiliser l'élément mobile (60) ;
• pour chacun des deux signaux de mesure (A, B), calculer un intervalle de positions associé au signal de mesure (A), dans lequel au moins un des intervalles de positions a une longueur supérieure à la résolution du capteur de position (7) ayant acquis le signal de mesure (A) associé à l'intervalle ;
• détecter une sortie de la valeur d'un signal de mesure (A) hors de l'intervalle associé, pendant que le signal de commande (S) est fixé à la valeur constante.

9. Système de commande d'un actionneur (4) comprenant un élément mobile (60), le système comprenant :
• un dispositif de commande (1) de l'actionneur selon la revendication précédente,
• une pluralité de capteurs de position (7) configurés pour acquérir des signaux de mesure (A, B) de position de l'élément mobile (60) ;
• au moins une voie de retour (8) pour transmettre à l'entrée du dispositif de commande (1) les signaux de mesure (A, B) acquis par les capteurs de position (7).

## Patentansprüche

1. Verfahren zur Steuerung eines Aktuators (4), umfassend ein bewegliches Element (60), wobei das Verfahren die Schritte umfasst:
• Empfang eines Sollsignals (E) und von zwei Positionsmess-Signalen (A, B) des beweglichen Elements (60), die durch unterschiedliche Positionssensoren (7) erfasst werden;
• Berechnen einer Abweichung zwischen den zwei Positionsmess-Signalen (A, B);
• Erzeugen (102) eines Steuersignals (S) zum Steuern einer Verschiebung des beweglichen Elements (60) ausgehend von dem Sollsignal (E) und wenigstens einem der Positionsmess-Signale (A, B) ;
• Steuern der Verschiebung des beweglichen Elements (60) des Aktuators (4) mithilfe des erzeugten Steuersignals (S);
**dadurch gekennzeichnet, dass**, wenn die Abweichung zwischen den Positionsmess-Signalen (A, B) einen vorbestimmten Grenzwert (201) überschreitet, das genannte Verfahren die folgenden Schritte umfasst:
• Fixieren (202) des Steuersignals (S) in offener Schleife bei einem konstanten Wert, der unabhängig von den Positionsmess-Signalen (A, B) gewählt ist, derart, dass das bewegliche Element (60) blockiert ist;
• für jedes der zwei Messsignale (A, B) Berechnen eines Positionsintervalls, das dem Messsignal (A) zugeordnet ist, bei dem wenigstens eines der Positionsintervalle eine größere Länge als die Auflösung des Positionssensors (7) aufweist, der das dem Intervall zugeordnete Messsignal (A) erfasst hat;
• Detektieren eines Ausgangs des Wertes eines Messsignals (A) außerhalb des zugeordneten Intervalls, während das Steuersignal (S) auf den konstanten Wert festgelegt ist.

2. Verfahren gemäß Anspruch 1, bei dem das Steuersignal (S) nach dem Ausgangsdetektions-Schritt ausgehend von dem Sollsignal (E) und wenigstens einem Messsignal (A) mit Ausnahme des Messsignals (A) erzeugt wird, dessen Ausgang außerhalb des zugeordneten Intervalls detektiert wurde.

3. Verfahren gemäß einem der voranstehenden Ansprüche, bei dem das Steuersignal (S) ausgehend von dem Sollsignal (E) und wenigstens einem Messsignal (A, B) nach einer vorbestimmten Dauer ab dem Augenblick erzeugt wird, in dem die Abweichung zwischen den Messsignalen (A, B) den vorbestimmten Grenzwert überschritten hat, wobei die Dauer bevorzugt unter 100 Millisekunden beträgt.

4. Verfahren gemäß einem der voranstehenden Ansprüche, umfassend die Meldung (206) eines Ausfalls des Messsignals (A), dessen Wert aus dem zugeordneten Intervall herausgetreten ist.

5. Verfahren gemäß einem der voranstehenden Ansprüche, bei dem das Positionsintervall den Wert enthält, der von dem Messsignal (A) erfasst wird, wenn die Abweichung den vorbestimmten Grenzwert überschritten hat.

6. Verfahren gemäß einem der voranstehenden Ansprüche, bei dem wenigstens eines der Positionsintervalle eine Länge von mehr als oder gleich dem Sechsfachen der Auflösung aufweist.

7. Verfahren gemäß einem der voranstehenden Ansprüche, bei dem das Steuersignal (S) ausgehend von einem Durchschnitt (R) jedes Messignals (A) der Position erzeugt wird, deren Austreten aus dem zugeordneten Intervall nicht detektiert wurde.

8. Steuervorrichtung (1) eines Aktuators (4), umfassend ein bewegliches Element (60), wobei die Steuervorrichtung (1) umfasst:
• wenigstens einen Eingang zum Empfangen eines Sollsignals (E) und zwei Messignale (A, B) der Position des beweglichen Elements (60), die von unterschiedlichen Positionssensoren (7) erfasst werden;
• ein Korrekturnetz (3), das ausgestaltet ist zum: Berechnen einer Abweichung zwischen den zwei Positionsmess-Signalen (A, B), Erzeugen eines Steuersignals (S) zum Steuern einer Verschiebung des beweglichen Elements (60) ausgehend von dem Sollsignal (E) und wenigstens einem der Messsignale (A, B) der Position und Übertragen des von dem Aktuator erzeugten Steuersignals (S), damit der Aktuator das bewegliche Element (60) des Aktuators (4) mithilfe des Steuersignals (S) verschiebt;
**dadurch gekennzeichnet, dass** das Korrekturnetz (3) darüber hinaus ausgestaltet ist, um die folgenden Schritte umzusetzen, wenn die Abweichung zwischen den Messsignalen (A, B) einen vorbestimmten Grenzwert überschreitet:
• Fixieren des Steuersignals (S) in offener Schleife auf einen konstanten Wert, der unabhängig von den Positionsmess-Signalen (A, B) gewählt wird, derart, dass das bewegliche Element (60) blockiert wird;
• für jedes der zwei Messsignale (A, B) Berechnen eines Positionsintervalls, das dem Messsignal (A) zugeordnet ist, bei dem wenigstens eines der Positionsintervalle eine größere Länge als die Auflösung des Positionssensors (7) aufweist, der das dem Intervall zugeordnete Messsignal (A) erfasst hat;
• Detektieren eines Ausgangs des Wertes eines Messsignals (A) außerhalb des zugeordneten Intervalls, während das Steuersignal (S) auf den konstanten Wert festgelegt ist.

9. Steuersystem eines Aktuators (4), umfassend ein bewegliches Element (60), wobei das System umfasst:
• eine Steuervorrichtung (1) des Aktuators gemäß dem voranstehenden Anspruch,
• eine Vielzahl von Positionssensoren (7), die zum Erfassen der Messsignale (A, B) der Position des beweglichen Elements (60) ausgestaltet sind;
• wenigstens einen Rückweg (8), um die von den Positionssensoren (7) erfassten Messsignale (A, B) auf den Eingang der Steuervorrichtung (1) zu übertragen.

## Claims

1. A method for controlling an actuator (4) comprising a movable element (60), the method comprising steps of:
• receiving a set point signal (E) and two position measurement signals (A, B) of the movable element (60) acquired by different position sensors (7);
• calculating a deviation between both position measurement signals (A, B);
• generating (102) a control signal (S) to control a movement of the movable element (60), from the set point signal (E) and at least one of the position measurement signals (A, B);
• controlling the movement of the movable element (60) of the actuator (4) using the control signal (S) generated;
**characterised in that** when the deviation between the position measurement signals (A, B) crosses (201) a predetermined threshold, said method includes the following steps of:
• setting (202) the open loop control signal (S) to a constant value selected independently of the position measurement signals (A, B) so as to immobilise the movable element (60);
• for each of both measurement signals (A, B), calculating a position interval associated with the measurement signal (A), wherein at least one of the position intervals has a length greater than the resolution of the position sensor (7) having acquired the measurement signal (A) associated with the interval;
• detecting an exit of the value of a measurement signal (A) out of the associated interval while the control signal (S) is set to the constant value.

2. The method according to claim 1, wherein, after the exit detection step, the control signal (S) is generated from the set point signal (E) and at least one measurement signal (A), except for the measurement signal (A) the exit out of the associated interval of which has been detected.

3. The method according to one of the preceding claims, wherein the control signal (S) is generated from the set point signal (E) and at least one measurement signal (A, B) after a predetermined period of time starting from the time instant at which the deviation between the measurement signals (A, B) crossed the predetermined threshold, the period of time being preferably lower than 100 milliseconds.

4. The method according to one of the preceding claims, comprising signalling (206) a failure of the measurement signal (A) the value of which exited out of the associated interval.

5. The method according to one of the preceding claims, wherein the position interval includes the value taken by the measurement signal (A) when the deviation crossed the predetermined threshold.

6. The method according to one of the preceding claims, wherein at least one of the position intervals has a length greater than or equal to six times said resolution.

7. The method according to one of the preceding claims, wherein the control signal (S) is generated from an average (R) of each position measurement signal (A) the exit out of the associated interval of which has not been detected.

8. A control device (1) for an actuator (4) comprising a movable element (60), the control device (1) comprising:
• at least one input to receive a set point signal (E) and two position measurement signals (A, B) of the movable element (60) acquired by different position sensors (7);
• a corrective network (3) configured to: calculate a deviation between both position measurement signals (A, B), generate a control signal (S) to control a movement of the movable element (60), from the set point signal (E) and at least one of the position measurement signals (A, B), and transmit the control signal (S) generated to the actuator so that the actuator moves the movable element (60) of the actuator (4) using the control signal (S);
**characterised in that** the corrective network (3) is further configured to implement the following steps, when the deviation between the measurement signals (A, B) crosses a predetermined threshold, of:
• setting the open loop control signal (S) to a constant value selected independently of the position measurement signals (A, B) so as to immobilise the movable element (60);
• for each of both measurement signals (A, B), calculating a position interval associated with the measurement signal (A), wherein at least one of the position intervals has a length greater than the resolution of the position sensor (7) having acquired the measurement signal (A) associated with the interval;
• detecting an exit of the value of a measurement signal (A) out of the associated interval, while the control signal (S) is set to the constant value.

9. A control system of an actuator (4) comprising a movable element (60), the system comprising:
• a control device (1) for the actuator according to the preceding claim,
• a plurality of position sensors (7) configured to acquire position measurement signals (A, B) of the movable element (60);
• at least one return channel (8) to transmit the measurement signals (A, B) acquired by the position sensors (7) to the input of the control device (1).
